Europäisches Patentamt

European Patent Office

Office européen des brevets

(19)

(11) **EP 0 807 612 A1**

(12) **DEMANDE DE BREVET EUROPEEN**

(43) Date de publication:
**19.11.1997 Bulletin 1997/47**

(51) Int Cl.⁶: **C04B 24/38, C04B 28/14**

(21) Numéro de dépôt: **97401053.0**

(22) Date de dépôt: **12.05.1997**

| | |
|---|---|
| (84) Etats contractants désignés:<br>**AT BE CH DE DK ES FI FR GB GR IE IT LI NL PT SE** | (72) Inventeurs:<br>• **Graux, Jean-Pierre**<br>  **62190 Lillers (FR)**<br>• **Robert, Clément**<br>  **62840 Sailly-Sur-La-Lys (FR)** |
| (30) Priorité: **15.05.1996 FR 9606107** | |
| (71) Demandeur: **Roquette Frères**<br>**F-62136 Lestrem (FR)** | (74) Mandataire: **Boulinguiez, Didier**<br>**Cabinet Plasseraud**<br>**84, rue d'Amsterdam**<br>**75440 Paris Cedex 09 (FR)** |

(54) **Nouvelle composition de plâtre contenant un composé amylacé**

(57)     La présente invention a pour objet une nouvelle composition de plâtre, d'enduit ou d'adhésif à base de plâtre, contenant un composé amylacé.

Le composé amylacé utilisé conformément à l'invention consiste en un composé amylacé cationique présentant, de façon caractéristique, un taux d'azote fixé au moins égal à 0,15 % environ et une solubilité aqueuse au moins égale à 50 % environ.

EP 0 807 612 A1

## Description

La présente invention a pour objet une nouvelle composition de plâtre contenant un composé amylacé.

Par "plâtre" on entend notamment l'ensemble des plâtres de construction, des plâtres pour emplois spéciaux du bâtiment, des plâtres pour la pré-fabrication ainsi que des plâtres à mouler pour les arts et l'industrie.

Cette définition inclut en particulier :

- les plâtres manuels, de toutes natures, compositions, caractéristiques et granulométries,
- les plâtres pour enduits, plâtres de surfaçage (y compris de finition par lissage ou application pelliculaire), plâtres pour projeter, plâtres pour supports lisses, plâtres pour ragréage de sol, plâtres à briqueter, plâtres pour enduits extérieurs, l'ensemble desdits plâtres pouvant être de toutes natures, compositions, caractéristiques et granulométries.

Cette définition s'applique également à toute composition contenant un plâtre comme composant significatif ou majoritaire, et donc en particulier à tous les enduits ou adhésifs à base de plâtre pour travaux intérieurs ou extérieurs.

Les compositions de plâtre selon l'invention doivent être considérées aussi bien sous forme de poudres, celles-ci étant ou non prêtes à l'emploi, que sous forme, par exemple, de mélanges plâtre/eau plus ou moins homogènes, de pâtes plus ou moins fluides, de pâtes durcies ou d'articles finis de toutes formes, caractéristiques (y compris caractéristiques mécaniques, densité et porosité) et destinations.

Les compositions de plâtre selon l'invention peuvent notamment consister en des compositions de plâtre (poudres prêtes à l'emploi ou non, gâchées ou mortiers de plâtre, etc...) pour usage manuel ou usage en projection mécanique.

L'origine, la nature et la concentration de toute forme de sulfate de calcium contenue dans le plâtre (forme dihydrate = gypse, formes hydratées, notamment semihydrates, formes cuites/réhydratées, formes anhydres,...) ne sont aucunement limitatives dans le cadre de la présente invention. Le plâtre présent dans la composition de plâtre selon l'invention peut, à titre d'exemple, contenir d'environ 50% à 100 % en poids de forme(s) semi-hydrate(s) de sulfate de calcium.

L'utilisation de composés amylacés et autres polysaccharides dans le domaine des plâtres et enduits à base de liants hydrauliques, est largement divulguée dans la littérature.

A titre d'exemple, les brevets FR 1 429 406 et EP 172 773 décrivent l'utilisation de composés amylacés, natifs ou modifiés chimiquement, pour la fabrication de plaques de plâtre ou carreaux de plâtre avec revêtement cartonné.

Dans ces documents, les amylacés sont des produits granulaires, éventuellement fluidifiés, qui assurent une bonne liaison entre le carton et le plâtre après traitement thermique à température élevée, de l'ordre de 180-190°C.

Pour la fabrication de tels articles, il est obligatoire que les composés amylacés n'aient pas d'influene préjudiciable sur la fluidité, le durcissement et la prise du corps de plâtre. Ces composés amylacés ne doivent pas, en premier lieu, avoir d'effet épaississant afin que la composition de plâtre ait une fluidité suffisante pour se répartir uniformément sur le revêtement cartonné.

D'autres documents décrivent l'utilisation de composés amylacés dans le domaine des plâtres mais ce, à d'autres fins que d'assurer l'effet de collage entre carton et plaque , recherché pour les plaques de plâtre.

A titre d'exemple, le brevet allemand DE 32 03 067 décrit l'utilisation, en tant qu'agents dispersants de plâtre, d'associations basées sur deux dérivés polysaccharidiques différents. Le premier est généralement un dérivé de cellulose de type "CMC", le second pouvant consister en un dérivé d'amidon, en particulier en un composé amylacé anionique de type amidon phosphaté ou oxydé.

Le brevet européen EP 117 431 souligne l'intérêt, en tant qu'agents rétenteurs d'eau pour mélanges à base de plâtre, d'associations entre des composés cellulosiques particuliers, à savoir des éthers de cellulose non ioniques, et des composés amylacés particuliers, à savoir des amidons prégélatinisés hydroxyalkylés, notamment hydroxyéthylés ou propylés.

Pour sa part, le brevet européen EP 131 090 préconise la mise en oeuvre, comme agents rétenteurs d'eau d'adhésifs ou de liants hydrauliques, de polysaccharides modifiés par des polymères particuliers , en l'occurrence des polymères a) réticulés, b) gonflant/insolubles dans l'eau et c) non floculant.

Il apparaît que de tels additifs peuvent avantageusement consister en des dérivés (hydroxy)alkylés de cellulose modifiés par un polyacrylamide réticulé.

D'un autre côté, si l'on tient compte des composés amylacés effectivement exploités industriellement dans les compositions de plâtre, il apparaît que sont quasi exclusivement concernés les composés amylacés hydroxyalkylés et/ou carboxyalkylés, en particulier les fécules de pomme de terre hydroxypropylées et carboxyméthylées.

Cependant de tels composés, utilisés comme agents épaississants, présentent certains désavantages.

Les composés amylacés carboxyalkylés sont des produits alcalins et sont donc sensibles au problème de stockage, y compris au sein de plâtres aérés. La carbonatation de tels composés amylacés se manifeste, entre autres, par une solubilité et une efficacité diminuées. Indépendamment, cette efficacité (pouvoir épaississant) est généralement diminuée pour des compositions de plâtre dont le pH est supérieur à 10,5 environ.

En outre, la préparation de composés amylacés carboxyalkylés, notamment à degrés de substitution (DS) moyens ou élevés, nécessite la mise en oeuvre de procédés et dispositifs lourds et coûteux.

Pour leur part, les composés amylacés hydroxyalkylés sont, en pratique industrielle, utilisés principalement dans les compositions de plâtre dont le pH est supérieur à 11 environ.

La préparation de tels composés amylacés est à la fois délicate (mise en oeuvre d'oxydes d'alkylène) et coûteuse.

Le fait que les composés amylacés carboxyalkylés d'une part et hydroxyalkylés d'autre part soient véritablement efficaces dans des zones de pH différentes entraîne, pour les fabricants de compositions de plâtre, la nécessité de s'approvisionner en ces deux catégories de composés amylacés en vue de couvrir au mieux les besoins de leur propre clientèle.

De plus, il semble qu'aucune de ces catégories ne soit totalement conforme aux exigences actuelles de la technique en ce qui concerne les plâtres dont le pH se situe dans une zone qualifiable d'"intermédiaire", à savoir dont le pH se situe entre 10,5 et 11 environ.

Ce constat a, entre autres, amené certains producteurs de composés amylacés à préconiser l'emploi, dans certaines circonstances, de produits qui soient simultanément carboxyalkylés et hydroxyalkylés.

De tels produits "di-substitués" associent cependant les inconvénients, y compris en termes de simplicité/coût d'obtention, de chacune des deux catégories de composés amylacés "mono-substitués" susmentionnées.

Il résulte de ce qui précède qu'il existait un besoin de trouver, en tant qu'additif pour compositions de plâtre, un composé amylacé qui soit à la fois :

- applicable à des compositions de plâtre de natures, compositions et destinations variées,
- utilisable dans des compositions de plâtre présentant des pH variés, y compris situés dans la zone "intermédiaire" précitée de 10,5-11 environ,
- issu d'un procédé d'obtention simple, souple et peu coûteux,
- d'efficacité non substantiellement altérable au stockage.

La Société Demanderesse a eu le mérite de trouver qu'un tel composé amylacé pouvait consister en un composé amylacé de nature cationique présentant des caractéristiques particulières en termes a) de taux d'azote fixé et b) de solubilité aqueuse.

L'utilisation de composés amylacés cationiques dans des compositions de plâtre n'est pas nouvelle en soi puisqu'elle a été décrite au niveau du brevet français FR 2.434.821 délivré au nom de la Société Demanderesse. L'exemple VI dudit brevet décrit ainsi la mise en oeuvre, dans des compositions de plâtre à projeter, de composés amylacés cationiques particuliers, à savoir des fécules de pomme de terre cationiques présentant un taux d'azote fixé élevé (2 % environ) et une viscosité élevée.

De telles fécules cationiques sont présentées comme de bons additifs épaississants/rétenteurs d'eau dès lors qu'elles sont introduites à raison d'au moins 0,5 % en poids des compositions de plâtre étudiées.

Cependant, à la connaissance de la Demanderesse, de tels composés amylacés cationiques n'ont jamais fait l'objet d'une véritable exploitation industrielle et commerciale dans les plâtres, que ce soit dans les plâtres à projeter du type de celui décrit dans le brevet FR 2.434.821 susmentionné, ou dans toute autre composition de plâtre, d'enduit ou d'adhésif à base de plâtre.

Il apparaît globalement, comme il sera exemplifié par ailleurs, que des composés amylacés cationiques tels que ceux décrits dans le brevet FR 2.434.821 n'ont qu'un pouvoir épaississant limité et, en tous cas, ne permettent pas de répondre aux exigences actuelles de la technique.

Ceci explique d'ailleurs pourquoi l'homme de l'art a, jusqu'à ce jour, privilégié la mise en oeuvre, dans les plâtres, des composés amylacés hydroxyalkylés et/ou carboxyalkylés évoqués précédemment.

A l'issue de longues recherches, la Société Demanderesse a désormais mis en évidence que des composés amylacés cationiques pouvaient tout-à-fait convenir dans ce genre d'applications dès lors que l'on conférait auxdits composés deux caractéristiques essentielles, à savoir :

- un taux d'azote fixé d'au moins 0,15 % environ, et
- une solubilité aqueuse d'au moins 50 % environ.

Par "taux d'azote fixé" on entend le poids d'azote tertiaire ou quaternaire contenu dans un composé amylacé cationique donné, le poids sec de ce dernier étant pris en compte.

Ainsi, un taux d'azote fixé de 0,50 % indique que 100 g de matière sèche de produit, contiennent 0,5 g d'azote.

La "solubilité aqueuse" est appréciée, à froid (20°C), selon le protocole suivant :

Dans un bêcher de 50 ml muni d'un agitateur magnétique, on introduit 200 ml d'eau distillée à 20°C. On ajoute, sous agitation, 5 g de composé amylacé et on laisse le mélange sous agitation pendant 15 minutes. On centrifuge ensuite le mélange homogénéisé obtenu pendant 10 minutes à 4.000 tours/minute et à température ambiante.

On prélève ensuite 25 ml de liquide surnageant que l'on introduit dans un récipient taré (cristallisoir en verre de 95 mm de diamètre, préalablement séché à l'étuve).

Le tout est placé dans une étuve aérée à 60°C et ce jusqu'à évaporation de l'eau, puis pendant 1 heure dans une étuve à circulation d'air réglée à 103+/- 2°C.

Le récipient est ensuite introduit dans un dessiccateur en vue de le refroidir à température ambiante, puis repesé.

La solubilité aqueuse ("SA"), exprimée en pourcentage en masse du produit de départ, est donnée par la formule ci-dessous :

$$SA = ((M \times 200) / (25 \times P)) \times 100$$

où

M = masse du résidu, en g.
P = masse de la prise d'essai, en g.

Les composés amylacés cationiques décrits dans le brevet français FR 2.434.821 susmentionné présentent une solubilité aqueuse largement inférieure à 50 %, se situant généralement entre 10 et 30 % environ.

De façon très surprenante, bien que ces composés amylacés cationiques selon l'art antérieur présentent une viscosité aqueuse très élevée, ils s'avèrent être des agents épaississants de compositions de plâtre beaucoup moins efficaces que ceux utilisés conformément à la présente invention, lesquels présentent pourtant une viscosité sensiblement plus faible.

La Société Demanderesse a également trouvé, comme indiqué ci-dessus, que les composés amylacés cationiques mis en oeuvre selon l'invention devaient présenter un taux d'azote fixé d'au moins 0,15 % environ pour être véritablement efficaces.

De façon surprenante, et comme il sera exemplifié par ailleurs, il a été constaté qu'un composé amylacé cationique présentant un taux d'azote fixé inférieur à cette limite (par exemple de 0,12 %) ne se révélait pas être un agent épaississant très efficace :

- bien qu'il présente une solubilité aqueuse très élevée (95 %),
- même s'il était mis en oeuvre à des taux d'introduction significativement supérieurs à un composé amylacé cationique utilisé conformément à l'invention et présentant, par exemple, un taux d'azote fixé d'environ 0,3 %.

Il résulte de ce qui précède que la présente invention a pour objet une composition de plâtre contenant un composé amylacé cationique, caractérisée en ce que ledit composé amylacé cationique présente un taux d'azote fixé d'au moins 0,15 % environ et une solubilité aqueuse d'au moins 50 % environ.

De manière avantageuse, ledit composé amylacé cationique présente une solubilité aqueuse de 70 à 100 %, de préférence de 75 à 99,8 %.

Selon une autre variante de l'invention, ledit composé amylacé cationique présente un taux d'azote fixé de 0,16 à 2 %, de préférence de 0,2 à 1,85 %. La Société Demanderesse a trouvé que des composés amylacés cationiques présentant un taux d'azote fixé de 0,25 à 1,50 % environ étaient particulièrement bien adaptés à la présente invention.

Enfin, selon une troisième variante, ledit composé amylacé cationique représente moins de 0,5 %, en particulier d'environ 0,01 à environ 0,2 %, exprimé en poids par rapport au poids de plâtre contenu dans ladite composition.

Par "composé amylacé" au sens de la présente invention, on entend l'ensemble des amidons, d'origine naturelle ou hybride, y compris ceux issus de mutations ou manipulations génétiques. Lesdits amidons peuvent notamment être issus de pomme de terre, de pomme de terre à haute teneur en amylopectine (pomme de terre waxy), de maïs, de blé, de maïs à haute teneur en amylopectine (maïs waxy), de maïs à haute teneur en amylose, de riz, de pois ou de manioc, des coupes ou fractions qui peuvent en être faites ou obtenues telles que l'amylose, l'amylopectine, les coupes granulométriques connues de l'homme de l'art sous les vocables d'amidon de blé "A" et amidon de blé "B", et les mélanges quelconques d'au moins deux quelconques des produits susmentionnés, par exemple un mélange d'au moins un amidon de tubercule (fécule de pomme de terre notamment) et d'au moins un amidon de céréale (amidon de blé "A", blé "B", maïs, maïs waxy notamment). Les composés amylacés utilisables selon l'invention peuvent également consister en des farines ou autres mélanges contenant amidon(s) et protéine(s) végétale(s), le composant "amidon(s)" étant majoritaire.

Il peut s'agir également de dérivés d'amidon, lesquels peuvent, comme il sera décrit par ailleurs, subir au moins un traitement supplémentaire antérieurement, simultanément ou postérieurement à l'étape de cationisation nécessaire à l'obtention d'un composé amylacé cationique.

Ladite étape de cationisation du composé amylacé peut être menée en milieu aqueux, en milieu solvant ou en phase sèche, de façon à permettre à un ou plusieurs groupement(s) azoté(s) de nature électropositive de se fixer sur le composé amylacé.

Lesdits groupements azotés peuvent notamment renfermer un atome d'azote tertiaire ou quaternaire comme les réactifs décrits dans les brevets FR 2.434.821, EP 139.597 et EP 282.415, déposés au nom de la Demanderesse.

Les composés amylacés cationiques utilisés dans la composition de plâtre selon l'invention peuvent notamment être préparés par l'une quelconque des techniques de cationisation, en particulier de cationisation en phase sèche, décrites dans les brevets FR 2.434.821, FR 2.477.159, EP 333.292, EP 406.837, US 4.332.935 et US 4.492.536. Ils peuvent d'ailleurs être de nature "polycationique" tels que ceux décrits dans les brevets EP 406.837 et US 4.492.536. Ils peuvent consister en des mélanges présentant des rapports pondéraux fécule de pomme de terre cationique / amidon de blé ou de maïs cationique allant d'environ 10/90 à environ 90/10, et notamment de 20/80 à 80/20, étant entendu que la cationisation peut avoir été opérée, comme décrit au niveau du brevet EP 139.597 au nom de la Demanderesse, sur le mélange des deux amidons ou, de façon séparée, sur chacun des deux amidons, lesquels sont ensuite mélangés.

Comme indiqué précédemment, le composé amylacé utilisé selon l'invention peut, antérieurement, simultanément ou postérieurement à l'étape de cationisation, être soumis à au moins un traitement chimique et/ou au moins un traitement physique.

Le traitement chimique peut notamment consister en l'une ou l'autre des techniques connues de réticulation, d'oxydation, de traitement alcalin, de fluidification ou hydrolyse par voie acide et/ou enzymatique, d'éthérification, d'estérification, de sulfonation ou de plastification.

A titre d'exemple, la Société Demanderesse a trouvé qu'en sus des amidons cationiques, i.e d'amidons non traités avant, pendant ou après cationisation, des composés amylacés particulièrement utiles dans le cadre de l'invention pouvaient consister en des amidons cationiques traités (avant, pendant et/ou après cationisation) par une technique de réticulation, d'oxydation ou de fluidification acide et/ou enzymatique.

Par technique de réticulation, on entend notamment tout procédé faisant réagir un amidon (ou amidon cationique) par un agent tel que l'acide adipique ou l'un de ses dérivés, une halohydrine (par exemple l'épichlorhydrine), un trimétaphosphate (par exemple de sodium), l'oxychlorure de phosphore ou une résine (par exemple à base de formol).

De tels amidons cationiques réticulés sont notamment décrits au niveau du brevet européen EP 603.727.

Par technique d'oxydation, on entend notamment toute technique d'oxydation non dégradative, permettant de substituer au moins un groupement OH de l'amidon (ou amidon cationique) par un groupement COOH.

De telles techniques sont, en particulier, décrites au niveau des brevets européens EP 232.202 et 562.927.

Les techniques de fluidification ou d'hydrolyse d'amidons et dérivés par voie acide et/ou enzymatique sont largement connues de l'homme de l'art.

Dans le cas présent, les amidons cationiques fluidifiés seront, de préférence, des hydrolysats d'amidons cationiques présentant un dextrose équivalent (DE) inférieur à 5 environ.

En suite de quoi, la composition de plâtre selon l'invention peut également être caractérisée par le fait que le composé amylacé cationique qu'elle contient est choisi parmi les amidons cationiques, les amidons cationiques réticulés, les amidons cationiques oxydés et les amidons cationiques fluidifiés ou hydrolysés par voie acide et/ou enzymatiques consistant, de préférence, en des hydrolysats d'amidon cationiques d'un DE inférieur à 5.

Comme indiqué précédemment, il est également possible, conformément à l'invention, de faire appel à d'autres composés amylacés cationiques tels que des amidons cationiques traités (avant, pendant et/ou après cationisation) par des techniques d'étherification, d'estérification ou de plastification comme, par exemple, des amidons cationiques hydroxyalkylés, des amidons cationiques acétylés, propionylés ou succinylés, des amidons cationiques plastifiés par des polyols (sorbitol, maltitol, lactitol, glycérine,...), des lactates et/ou de l'urée.

Certaines de ces techniques permettent d'obtenir des amidons amphotères, i.e des composés amylacés à la fois cationiques et anioniques.

Comme il a été dit ci-avant, le composé amylacé utilisé selon l'invention peut, antérieurement, simultanément ou postérieurement à l'étape de cationisation, être soumis à un traitement physique ou à plusieurs traitements physiques, ceux-ci pouvant d'ailleurs être opérés simultanément ou non.

Ces traitements physiques peuvent en particulier être choisis parmi les traitements thermiques, les traitements mécaniques, les traitements aux (très) hautes pressions, les traitements aux ultra-sons, les traitements aux micro-ondes ou les traitements sous vide.

De tels traitements peuvent notamment consister en des traitements de cuisson-extrusion, de cuisson à la vapeur en continu, de gélatinisation sur tambour, d'atomisation, de fluidification ou cisaillement mécanique ou de broyage.

De tels traitements physiques peuvent tout-à-fait, comme déjà annoncé, être a) associés aux traitements chimiques précités ou b) menés simultanément à la cationisation (cationisation "in situ" de l'amylacé lors de sa cuisson par exemple).

En suite de quoi, la composition de plâtre selon l'invention peut, de façon avantageuse, être caractérisée par le fait que le composé amylacé cationique qu'elle contient est choisi parmi les composés amylacés cationiques traités thermiquement, mécaniquement, aux (très) hautes pressions, aux ultra-sons, aux micro-ondes et/ou sous vide, en particulier choisi parmi les composés amylacés cationiques extrudés, cuits à la vapeur en continu, gélatinisés sur tambour, atomisés, fluidifiés ou cisaillés mécaniquement et/ou broyés.

De tels traitements peuvent, entre autres, permettre :

- d'augmenter la solubilité aqueuse de composés amylacés cationiques déjà utilisables selon l'invention, ou
- de rendre la solubilité aqueuse de composés amylacés compatible avec celle prévue conformément à l'invention, à savoir au moins égale à 50 %, de préférence au moins égale à 70 %.

Les traitements éventuels de broyage permettent, comme connu de l'homme de l'art, d'adapter la granulométrie du composé amylacé à celle du plâtre et, par exemple, d'obtenir un composé amylacé dont 95 % au moins des particules sont inférieures à 200 μm ou microns.

D'autre part, la Société Demanderesse a également observé que les composés amylacés (amidons, amidons modifiés chimiquement et/ou physiquement) cationiques utilisables dans les compositions de plâtre selon l'invention pouvaient également avantageusement être issus de céréales ou de tubercules présentant, naturellement ou non, par exemple par mutation ou manipulation génétique, une teneur en amylopectine d'au moins 80 % environ, en particulier, être issus de maïs waxy ou de pomme de terre waxy.

A titre informatif, de tels composés amylacés cationiques issus de maïs ou de pomme de terre waxy peuvent notamment présenter :

- un taux d'azote fixé de 0,25 à 1,50 % environ, et
- une solubilité aqueuse de 75 à 99,8 % environ.

Selon une variante de la présente invention, la composition de plâtre selon l'invention est donc caractérisée par le fait que le composé amylacé cationique qu'elle contient est choisi parmi les composés amylacés cationiques issus de céréales ou de tubercules présentant, naturellement ou non, une teneur en amylopectine d'au moins 80 % environ, de préférence issus de maïs waxy ou de pomme de terre waxy.

Comme il a été dit précédemment, de façon surprenante, les composés amylacés cationiques utilisables selon l'invention présentent une viscosité (très) inférieure à celle des produits décrits dans le brevet FR 2 434 821 alors qu'ils se révèlent être des agents épaississants significativement plus efficaces que ces derniers. De préférence, dans le cadre de la présente invention, les composés amylacés cationiques présentent une viscosité se situant entre environ 20 et environ 5000 mPa. s, de préférence de 50 à 3000 mPa.s, ladite viscosité étant mesurée à une concentration de 10 %. A une telle concentration de 10 %, des fécules de pomme de terre cationiques telles que décrites au niveau du brevet FR 2 434 821 présentent des viscosités substantiellement supérieures, par exemple de l'ordre de 20 000 à 40 000 mPa.s.

Comme indiqué précédemment, les notions de "plâtre" et "compositions de plâtre" au sens de la présente invention ne sont aucunement limitatives.

A côté du plâtre et du composé amylacé cationique, la composition selon l'invention peut également contenir et ce, dans des compositions très variables, au moins un adjuvant compris dans la liste non limitative comprenant :

- les accélérateurs de prise comme, par exemple, le gypse, le sulfate de potassium, la chaux,...,
- les retardateurs de prise comme, par exemple, les composés protéiniques et dérivés d'origine animale ou végétale (gélatine, kératine, hydrolysats protéiniques tels que le gluten de blé hydrolysé ou le produit dénommé "RETARDAN[R] P" commercialisé par la Société Chemische Fabrik Grünau GmbH, ...), les acides organiques, leurs sels et dérivés (gluconates, acides citrique ou tartrique, ...),

- les charges comme, par exemple, les fibres minérales (fibres de roche, fibres de verre, fibres siliceuses, silico-alumineuses, alumineuses ou silico-calciques), le kaolin, l'alumine, la bauxite, le sable, le mica, la perlite, la vermiculite,...,
- les rétenteurs d'eau comme, par exemple, les celluloses et dérivés cellulosiques (carboxyméthylcellulose), méthylcellulose, hydroxyméthylcellulose,...), les composés amylacés non cationiques, les alginates, les gommes (gommes xanthane, wellan, ...),
- les agents hydrofugeants comme, par exemple, les huiles silicones et produits dérivés, le stéarate de magnésium, ...,
- les adjuvants pour allégement, isolation thermique et/ou acoustique des articles finis à base de plâtre comme, par exemple, les billes de polystyrène, les billes de plastiques, billes de verre, fibres de verre, fibres de vieux papiers, perlites, déchets broyés de matières plastiques, ...,
- les agents antimousse, les agents fongicides, les agents bactéricides, les agents colorants, les agents collants (PVA, PVAC, versatate, ...).

Comme indiqué précédemment, la composition de plâtre selon l'invention peut se présenter sous la forme d'une poudre (prête à l'emploi ou non), d'un mélange plâtre/eau (homogène ou non), d'une pâte plus ou moins fluide, d'une pâte durcie et, enfin, d'un article fini destiné, entre autres, aux industries du bâtiment et des travaux publics.

Ainsi sont donc concernées par la présente invention, entre autres, les poudres de plâtre, d'enduit ou d'adhésif à base de plâtre, prêtes à l'emploi et les compositions de matière (mélanges, pâtes, articles finis) obtenues, à un moment quelconque, à partir de telles poudres, notamment en vue, lors et/ou à l'issue des opérations connues de malaxage, gâchage, gobetage, projection, durcissement, dressage, talôchage, lissage, enduisage, moulage/démoulage, séchage et mise en forme.

De préférence, les compositions de plâtre selon l'invention sont celles ne nécessitant pas de traitement thermique élevé après ou pendant les susdites opérations.

De telles compositions de plâtre peuvent notamment consister en des compositions de plâtre pour usage manuel ou usage en projection mécanique.

Il convient de souligner que dans le cadre du procédé de préparation de la composition de plâtre selon l'invention, la mise en oeuvre et la mise en présence entre eux, du composé amylacé cationique, du plâtre et des adjuvants éventuels peuvent s'effectuer selon une multitude de variantes, notamment en ce qui concerne la forme d'introduction (forme liquide, visqueuse ou solide, introduction par mélange intime ou par pulvérisation, ...) et le moment d'introduction (introduction dès le départ ou fractionnée dans le temps) de chacun de ces constituants au sein de ladite composition.

A titre d'exemple, le composé amylacé cationique peut se présenter sous forme d'une poudre, laquelle est mélangée à une composition de plâtre prête à l'emploi se présentant également sous forme d'une poudre.

Selon une autre variante, une poudre de composé amylacé est d'abord pré-mélangée à tout ou partie des adjuvants poudreux éventuels devant être contenus dans la composition de plâtre selon l'invention, puis le mélange de poudres ainsi obtenu, qualifiable de "composition adjuvante pour plâtre" est mis en présence du plâtre en tant que tel, ce dernier pouvant ou non être pré-adjuvanté.

Le composé amylacé cationique utilisé conformément à l'invention et dont la solubilité aqueuse est, comme il a été souligné, l'une des caractéristiques essentielles de l'invention, peut également être mis en présence du plâtre lors de l'opération de gâchage et ce, par le biais de l'eau de gâchage, cette dernière pouvant ou non être pré-adjuvantée.

En suite de quoi la présente invention a également pour objet l'utilisation d'un composé amylacé cationique présentant un taux d'azote fixé d'au moins 0,15 % environ et une solubilité aqueuse d'au moins 50 % environ pour la préparation de compositions de plâtre, en particulier de plâtres pour usage manuel ou usage en projection mécanique, ou pour la préparation de compositions adjuvantes ou d'eaux de gâchage destinées auxdites compositions.

D'une manière préférentielle, ledit composé amylacé cationique présente :

- un taux d'azote fixé de 0,20 à 1,85 %, et
- une solubilité aqueuse de 75 à 99,8 %.

De manière avantageuse, on utilise une quantité du composé amylacé cationique telle que la composition de plâtre, la composition adjuvante ou l'eau de gâchage, contient moins de 0,5 %, en particulier d'environ 0,01 à environ 0,2 %, en poids dudit composé amylacé, exprimé par rapport au poids de plâtre déjà contenu dans ladite composition ou devant être contenu dans celle-ci après sa mise en contact avec ladite composition adjuvante ou ladite eau de gâchage.

L'invention pourra être encore mieux comprise à l'aide des exemples qui suivent et qui font état de certains modes particulièrement avantageux des composés amylacés cationiques et compositions de plâtre pouvant être obtenu(e)s et utilisé(e)s conformément à l'invention.

EXEMPLE 1 :

UTILISATION DE COMPOSES AMYLACES CATIONIQUES, CONFORMES OU NON A L'INVENTION, DANS DES COMPOSITIONS DE PLATRE MANUEL

Dans le cadre de cet exemple, on compare la fonction épaississante de composés amylacés cationiques conformes à l'invention à celle de composés amylacés cationiques utilisés selon l'art antérieur et ce, dans des compositions de plâtre manuel.

Le plâtre utilisé dans le cadre de ces essais se présente sous la forme d'une poudre composée de 75 %, en poids, de sulfate de calcium semi-hydrate et de 25 %, en poids, de sulfate de calcium anhydre de type "surcuit".

On ajoute à ce plâtre :

a) 0,04 %, en poids, d'un composé amylacé cationique conforme ou non à l'invention,
b) 0,05 %, en poids, du retardateur de prise connu de l'homme de l'art sous l'appellation "RETARDAN[R] P" (sel de calcium d'amino-acides polyoxyméthylé), ce produit permettant de retarder la prise du plâtre et, par là même, de mieux apprécier l'efficacité du composé amylacé qui y est introduit.

Le pH de la composition de plâtre ainsi obtenue se situe à 10 environ. Une composition de plâtre "témoin" est réalisée de la même manière si ce n'est que l'on n'y introduit aucun composé amylacé.

Par saupoudrage, on mélange chacun des plâtres à un poids égal d'eau, de sorte que les compositions de plâtre étudiées présentent un rapport eau/plâtre au "E/P" de 1. Le caractère épaississant des composés amylacés cationiques conformes ou non à l'invention est apprécié de manière classique, conformément à la "Méthode d'étalement" décrite au Chapitre 3, Page 5 - Point 3.12. du "CATALOGUE DES METHODES D'ESSAIS DES PLÂTRES" édité en Avril 1983 au nom du SYNDICAT NATIONAL DES INDUSTRIES DU PLATRE.

Le temps de gâchage est de 3 minutes, en suite de quoi les compositions de plâtre obtenues, lesquelles se présentent alors sous forme de pâtes, sont introduites dans un moule cylindrique en laiton (hauteur : 50 mm, diamètre intérieur : 60 mm) de type "anneau SMIDTH" placé sur une plaque de verre, plane, lisse et propre. On arase la surface de la pâte au niveau supérieur dudit anneau, puis à un moment correspondant à 4 minutes après le début du gâchage, on soulève verticalement ledit anneau. On mesure ensuite, suivant deux directions perpendiculaires, le diamètre de la galette ainsi formée.

Pour chaque composition testée (composition "témoin" sans composé amylacé, compositions avec composé amylacé cationique conforme ou non à l'invention), on exprime la valeur d'étalement en mm, en tenant compte de la moyenne arithmétique des mesures faites sur ladite composition.

Il est entendu que plus une composition de plâtre montre une valeur d'étalement faible, plus le composé amylacé qu'elle contient peut être considéré comme un agent épaississant efficace.

Dans le cadre de ces essais, on étudie le caractère épaississant des composés amylacés cationiques T1 à T3 ci-après, non conformes à l'invention :

T1 = amidon de maïs cationique (taux d'azote fixé environ 0,12 %), fluidifié par hydrolyse acide puis extrudé, présentant une solubilité aqueuse de 95 % environ.

T2 = fécule de pomme de terre cationique (azote fixé environ 1,1 %) présentant une solubilité aqueuse de 30 % environ.

T3 = fécule de pomme de terre cationique (azote fixé environ 1,8 %) présentant une solubilité aqueuse de 10 % environ.

Les compositions de plâtre contenant, respectivement, les composés amylacés cationiques T1 à T3 sont dénommées ci-après, respectivement, COMPOSITIONS T1 à T3.

Pour sa part, la composition de plâtre "témoin" ne contenant aucun composé amylacé est appelée ci-après COMPOSITION T0.

Dans le cadre de ces mêmes essais, on étudie le caractère épaississant des composés amylacés cationiques A à H conformes à l'invention, ci-après :

A = fécule de pomme de terre cationique (azote fixé environ 0,3 %), extrudée et broyée, présentant une solubilité aqueuse de 84 % environ.

B = amidon de maïs waxy cationique (azote fixé environ 0,3 %), gélatinisé sur tambour sécheur, présentant une solubilité aqueuse de 88 % environ.

C = idem composé amylacé cationique B mais broyé à moins de 200 µm et présentant une solubilité aqueuse de 91% environ.

D = amidon de maïs waxy cationique (azote fixé environ 0,3 %), extrudé et présentant une solubilité aqueuse de 93 % environ.

E = amidon de maïs cationique (azote fixé environ 1 %), extrudé et présentant une solubilité aqueuse de 60 % environ.

F = fécule de pomme de terre cationique (azote fixé environ 1,1 %), extrudée et présentant une solubilité aqueuse de 96 % environ.

G = fécule de pomme de terre cationique (azote fixé environ 1,8 %), extrudée et présentant une solubilité aqueuse de 92 % environ.

H = fécule de pomme de terre cationique (azote fixé environ 0,6 %), réticulée au trimétaphosphate de sodium, extrudée et présentant une solubilité aqueuse de 90 % environ.

Les compositions de plâtre selon l'invention contenant, respectivement, les composés amylacés cationiques A à H sont dénommées ci-après, respectivement, COMPOSITIONS A à H.

Les résultats ci-dessous reprennent pour chacune des COMPOSITIONS T1 à T3 (non conformes à l'invention) et A à H (conformes à l'invention) la différence entre la valeur d'étalement obtenue pour ladite COMPOSITION et celle observée pour la COMPOSITION T0 exempte de tout composé amylacé. Cette différence est référencée ci-après par le symbole "delta VE".

Il est clair que dès lors que l'on incorpore un agent épaississant, quel qu'il soit, à une composition de plâtre, la valeur d'étalement de ladite composition diminue. En suite de quoi une composition de plâtre épaissie présente un "delta VE" toujours négatif et dont la valeur (exprimée en mm) augmente en fonction de l'efficacité de l'agent épaississant introduit.

| COMPOSITION | DELTA VE (en mm) |
|---|---|
| T0 | 0 |
| T1 | - 20 |
| T2 | - 10 |
| T3 | - 10 |
| A | -110 |
| B | -130 |
| C | -136 |
| D | -100 |
| E | - 85 |
| F | - 75 |
| G | - 95 |
| H | - 55 |

En outre, dans le cadre des mêmes essais, on a étudié le caractère épaississant des composés amylacés cationiques non conformes à l'invention T1 à T3 mais pour des taux d'introduction supérieurs à celui prévu initialement (0,04 % / poids de plâtre).

On a ainsi testé les COMPOSITIONS T1b, T2b, T2c, T3b et T3c ci après.

COMPOSITION T1b = idem COMPOSITION T1 mais avec un taux d'introduction de composé amylacé cationique T1 multiplié par 10, soit de 0,4 % / plâtre.

COMPOSITION T2b = idem COMPOSITION T2 mais avec un taux d'introduction de composé amylacé cationique T2 multiplié par 6, soit de 0,24 % / plâtre.

COMPOSITION T2c = idem COMPOSITION T2 mais avec un taux d'introduction de composé amylacé cationique T2 multiplié par 25, soit de 1 % / plâtre.

COMPOSITION T3b = idem COMPOSITION T3 mais avec 0,24% / plâtre de composé amylacé cationique T3.

COMPOSITION T3c = idem COMPOSITION T3 mais avec 1 % / plâtre de composé amylacé cationique T3.

On obtient les résultats suivants de "delta VE" en tenant compte de la valeur d'étalement obtenu sans le moindre composé amylacé (COMPOSITION témoin T0) :

| COMPOSITION | DELTA VE (en mm) |
|---|---|
| T0 | 0 |
| T1b | - 50 |

(suite)

| COMPOSITION | DELTA VE (en mm) |
|:---:|:---:|
| T2b | - 20 |
| T2c | - 40 |
| T3b | - 15 |
| T3c | - 40 |

Il résulte globalement des résultats de cet EXEMPLE 1 que les composés amylacés cationiques spécifiquement sélectionnés dans le cadre de l'invention se révèlent être des agents épaississants de plâtres manuels beaucoup plus efficaces que ceux utilisés conformément au brevet FR 2.434.821 et, de façon plus générale, que des composés amylacés cationiques ne présentant pas simultanément les deux caractéristiques obligatoires évoquées précédemment, à savoir :

- un taux d'azote fixé d'au moins 0,15 %, et
- une solubilité aqueuse d'au moins 50 %.

On observe que le composé amylacé cationique T1, bien que présentant une forte solubilité aqueuse (environ 95 %), ne présente pas un taux d'azote fixé suffisant permettant de le considérer comme un agent épaississant très efficace. Ceci est d'autant plus surprenant qu'il apparaît que même en augmentant significativement (par un facteur 10) le taux d'introduction dudit composé T1 (cf COMPOSITION T1b), celui-ci ne permet pas d'atteindre une efficacité comparable à celle obtenue avec l'un ou l'autre des composés amylacés cationiques utilisables conformément à l'invention. Ceci est vrai, par exemple, en regard des composés A à C, lesquels présentent pourtant a) un taux d'azote fixé relativement peu élevé (0,3 %) et b) une solubilité aqueuse inférieure au dit composé T1.

Les résultats du présent EXEMPLE 1 montrent, entre autres, la très bonne efficacité de composés amylacés cationiques conformes à l'invention présentant une forte teneur en amylopectine tels que ceux issus du maïs waxy (cf composés B à D).

Il convient également de préciser que des essais supplémentaires ont montré que, respectivement :

* le composé A dont l'utilisation est conforme à la présente invention, pouvait également être efficacement utilisé au sein de la composition de plâtre susdécrite a) par mise en oeuvre et dissolution préalables dans l'eau de gâchage destinée à la préparation de ladite composition ou b) par mise en oeuvre sous forme d'une colle d'amylacé introduit, simultanément ou non, à l'eau encore éventuellement nécessaire à cette préparation, la variante a) étant, en pratique industrielle, préférée à la variante b).
* le composé C, dont l'utilisation est conforme à la présente invention, pouvait également être efficacement mis en oeuvre au sein de la composition de plâtre susdécrite par le biais d'une composition adjuvante se présentant sous forme de poudre et incluant le "RETARDAN$^R$ P".

D'où il résulte, comme déjà précisé, que les composés amylacés cationiques dont l'utilisation est conforme à la présente invention, peuvent être avantageusement mis en oeuvre, non seulement pour la préparation de compositions de plâtre, mais également de compositions adjuvantes ou d'eaux de gâchage destinées à de telles compositions.

EXEMPLE 2 :

UTILISATION DE COMPOSES AMYLACES CATIONIQUES SELON L'INVENTION ET DE COMPOSES AMYLACES CARBOXY - OU HYDROXYALKYLES DANS DIFFERENTES COMPOSITIONS DE PLÂTRE.

Dans le cadre de cet exemple, on compare l'efficacité de composés amylacés cationiques conformes à l'invention à celle de composés amylacés de type, respectivement, hydroxyalkylé ou carboxyalkylé utilisés selon l'art antérieur et ce, dans trois compositions de plâtre présentant, en particulier, des pH différents.

Les composés amylacés cationiques conformes à l'invention dont le caractère épaississant est estimé dans au moins l'une desdites compositions de plâtre, consistent en les composés A, C et D décrits précédemment au niveau de l'EXEMPLE 1.

Le composé amylacé de type hydroxyalkylé dont le caractère épaississant est estimé consiste en la fécule de pomme de terre hydroxypropylée commercialisée par la Société AVEBE sous l'appellation "OPAGEL FP6Y", laquelle présente, selon le test de solubilité décrit précédemment, une solubilité aqueuse de 95 % environ. Ce composé amylacé utilisé selon l'art antérieur, sera dénommé ci-après composé T4.

Le composé amylacé de type carboxyalkylé dont le caractère épaississant est estimé consiste en la fécule de pomme de terre carboxyméthylée commercialisée par la Société AVEBE sous l'appellation "OPAGEL TPG", laquelle présente, selon le test de solubilité décrit précédemment, une solubilité aqueuse de 88 % environ. Ce composé amylacé, utilisé selon l'art antérieur, sera dénommé ci-après composé T5.

La première composition de plâtre étudiée dans le cadre de cet exemple est du même type que celle décrite au niveau de l'EXEMPLE 1, si ce n'est que l'on introduit dans le plâtre, en sus de 0,04 % d'un composé amylacé (conforme ou non à l'invention) et de 0,05 % de "RETARDAN$^R$ P", 0,1%, en poids, de chaux. En suite de quoi, ladite composition de plâtre présente un pH de 11,4 environ.

Par rapport à la composition témoin T0 ne contenant pas de composé amylacé mais contenant "RETARDAN$^R$ P" + 0,1% de chaux, on obtient, avec respectivement 0,04 % de chacun des composés A, C et T5, les COMPOSITIONS A, C et T5 qui présentent les valeurs de "delta VE" reprises ci-après :

| COMPOSITION | DELTA VE (en mm) |
|-------------|------------------|
| T0 | 0 |
| A | - 85 |
| C | - 100 |
| T5 | - 35 |

La seconde composition de plâtre étudiée dans le cadre de cet exemple est identique à la précédente si ce n'est que l'on introduit, en sus de 0,05 % de "RETARDAN$^R$ P", respectivement, 0,03 % d'un composé amylacé (conforme ou non à l'invention) et 0,05 % de chaux. En suite de quoi ladite composition de plâtre présente un pH de 10,6 environ.

Par rapport à une composition témoin T0 contenant uniquement "RETARDAN$^R$ P" et chaux (0,05 % / poids de plâtre), on obtient, avec respectivement 0,03 % de chacun des composés C, D, T4 et T5, les COMPOSITIONS C, D, T4 et T5 qui présentent les valeurs de "delta VE" reprises ci-après.

| COMPOSITION | DELTA VE (en mm) |
|-------------|------------------|
| T0 | 0 |
| C | - 70 |
| D | - 52 |
| T4 | - 45 |
| T5 | - 57 |

D'autre part, d'autres essais effectués avec une composition du même type que celle décrite au niveau de l'EXEMPLE 1, i.e exempte de chaux et présentant un pH de 10 environ, ont montré que le composé C, composé amylacé cationique conforme à la présente invention, était un agent d'épaississement tout aussi efficace que le composé carboxyméthylé T5 et significativement plus efficace que le composé hydroxypropylé T4.

Il ressort globalement des résultats du présent EXEMPLE 2 que dans le cadre de l'invention, les composés amylacés cationiques sélectionnés par la Demanderesse :

- sont aussi performants, voire plus performants que des composés amylacés non cationiques utilisés habituellement dans les compositions de plâtre, y compris que des composés amylacés carboxyalkylés utilisés couramment dans les plâtres manuels, et
- peuvent être utilisés conformément aux exigences actuelles de la technique et ce, dans des compositions présentant des pH variés, y compris des pH situés dans une "zone intermédiaire" entre 10,5 et 11 environ.

Ces résultats confirment, entre autres, la très bonne efficacité de composés amylacés cationiques conformes à l'invention présentant une forte teneur en amylopectine (= 80 % en poids) tels que ceux issus de maïs waxy.

EXEMPLE 3 :

UTILISATION DE COMPOSES AMYLACES CATIONIQUES, CONFORMES OU NON A L'INVENTION, DANS DES COMPOSITIONS DE PLÂTRE A PROJETER

Dans le cadre de cet exemple, on compare la fonction épaississante de composés amylacés cationiques, conformes ou non à l'invention, dans des compositions de plâtre à projeter.

Le plâtre à projeter utilisé dans le cadre de ces essais se présente sous la forme d'une poudre constituée essentiellement de sulfate de calcium semi-hydrate.

On ajoute à ce plâtre :

a) 0,14 %, en poids, d'un composé amylacé cationique, conforme ou non à l'invention,
b) 0,05 % de "RETARDAN$^R$ P", et
c) 0,6 % de chaux.

Le pH de la composition de plâtre ainsi obtenue se situe à 12,7 environ.

Une composition de plâtre "témoin" est réalisée de la même manière si ce n'est que l'on n'y introduit aucun composé amylacé.

Par saupoudrage, on mélange chacun des plâtres à un poids d'eau correspondant à 0,7 fois le poids de plâtre, de sorte que les compositions de plâtre étudiées présentent un rapport eau/plâtre ou "E/P" de 0,7.

Le caractère épaississant des composés amylacés cationiques, conformes ou non à l'invention, est apprécié de manière classique, conformément à la "Méthode de la table à secousses" décrite au Chapitre 3, Page 6 - point 3.2.1 du "CATALOGUE DES METHODES D'ESSAIS DES PLÂTRES" édité en Avril 1983 au nom du SYNDICAT NATIONAL DES INDUSTRIES DU PLÂTRE.

Après saupoudrage du plâtre dans l'eau (durée : 15 secondes), on agite, avec un malaxeur, la composition de plâtre pendant 20 secondes à une vitesse de 600 tours/mn puis 20 secondes à 900 tours/mn et enfin, 20 secondes à 1100 tours/mn. Durant la gâchée, on donne au malaxeur des mouvements horizontaux en huit à raison d'un par seconde.

La gâchée est, après repos (durée : 1 mn), versée dans un moule consistant en un anneau tronconique de dimensions normées (hauteur : 60 mm, diamètre intérieur 1 :100 mm, diamètre intérieur 2 : 70 mm), préalablement huilé et essuyé. On remplit à ras bord ledit moule et on le retire aussitôt lentement vers le haut.

Comme indiqué dans la "Méthode de la table à secousses" susmentionnée, on fait fonctionner la table à chocs pendant 15 secondes à raison d'une secousse par seconde. On mesure ensuite, suivant deux directions perpendiculaires, le diamètre de la galette ainsi formée.

Pour chaque composition testée, on exprime la valeur d'étalement en mm, en tenant compte de la moyenne arithmétique des mesures faites sur ladite composition.

Dans le cadre de ces essais, on étudie le caractère épaississant a) des composés amylacés cationiques T1 à T3 non conformes à l'invention, tels que déjà décrits au niveau de l'EXEMPLE 1, b) des composés amylacés C à E conformes à l'invention, tels que déjà décrits au niveau de l'EXEMPLE 1, et c) des composés amylacés I à O, également conformes à l'invention et dont la description est reprise ci-après.

composé I = hydrolysat d'amidon de blé A- de DE < 5, cationique (taux d'azote fixé environ 0,6 %), atomisé et présentant une solubilité aqueuse pratiquement égale à 100 %.
composé J = amidon de maïs waxy fluidifié, cationique (taux d'azote fixé environ 0,3 %) présentant une solubilité aqueuse de 85 % environ.
composé K = mélange d'amylacés (75 % blé/ 25 % pomme de terre), cationique (taux d'azote fixé du mélange environ 0,6 %), extrudé et présentant une solubilité aqueuse de 89 % environ.
composé L = fécule de pomme de terre cationique (azote fixé environ 0,6 %) réticulée et extrudée, présentant une solubilité aqueuse de 95 % environ.
composé M = amidon de maïs waxy cationique (taux d'azote fixé environ 0,7 %), extrudé et présentant une solubilité aqueuse de 80 % environ.
composé N = fécule de pomme de terre cationique (taux d'azote fixé environ 1 %), extrudée et présentant une solubilité aqueuse de 86 % environ.
composé O = amidon de blé A$^+$ cationique (taux d'azote fixé environ 1 %), extrudé et présentant une solubilité aqueuse de 85 % environ.

Les résultats ci-dessous reprennent pour chacune des COMPOSITIONS T1 à T3 (non conformes à l'invention), C à E (conformes à l'invention) et I à O (conformes à l'invention) résultant du présent EXEMPLE 3, la différence "delta VE" entre la valeur d'étalement obtenue pour ladite COMPOSITION et celle observée pour la COMPOSITION T0 exempte de tout composé amylacé.

Ces résultats incluent également les valeurs de "delta VE" obtenues avec respectivement chacune des COMPOSITIONS T1b, T1c, T2b, T2c, T3b et T3c consistant en les compositions de plâtre à projeter ci-après :

COMPOSITION T1b = idem COMPOSITION T1 du présent EXEMPLE 3 mais avec un taux d'introduction de composé amylacé cationique T1 multiplié par 3 environ (0,4 %).

COMPOSITION T1c = idem COMPOSITION T1b mais avec un taux d'introduction de composé amylacé cationique T1 multiplié par 10 soit 1,4 %.

COMPOSITION T2b = idem COMPOSITION T2 du présent EXEMPLE 3 mais avec un taux d'introduction de composé amylacé cationique T2 multiplié par 4 environ (0,58 %).

COMPOSITION T2c = idem COMPOSITION T2b mais avec un taux d'introduction de composé amylacé cationique T2 multiplié par 7 environ (1 %).

COMPOSITION T3b = idem COMPOSITION T3 du présent EXEMPLE 3 mais avec un taux d'introduction de composé amylacé cationique T3 multiplié par 4 environ (0,58 %).

COMPOSITION T3c = idem COMPOSITION T3b mais avec un taux d'introduction de composé amylacé cationique T3 multiplié par 7 environ (1 %).

Ainsi, à partir de l'ensemble des compositions de plâtre susdécrites au niveau du présent EXEMPLE 3, on obtient les valeurs de "delta VE" suivantes :

| COMPOSITION | DELTA VE (en mm) |
|---|---|
| T0 | 0 |
| T1 | - 10 |
| T2 | + 35 |
| T3 | + 44 |
| C | - 50 |
| D | - 65 |
| E | - 76 |
| I | - 54 |
| J | - 48 |
| K | - 75 |
| L | - 90 |
| M | - 86 |
| N | - 86 |
| O | - 97 |
| T1b | - 25 |
| T2b | 0 |
| T3b | + 10 |
| T1c | - 90 |
| T2c | - 10 |
| T3c | - 10 |

Les mesures faites dans le cadre de cet EXEMPLE 3 confirment que les composés amylacés cationiques spécifiquement sélectionnées dans le cadre de la présente invention sont significativement plus efficaces que ceux utilisés conformément au brevet FR 2 434 821 et, de façon plus générale, que des composés amylacés cationiques qui ne présentent pas, simultanément, les caractéristiques spécifiques de solubilité aqueuse (selon test décrit précédemment) et de taux d'azote fixé.

Le composé amylacé cationique T1, bien que présentant une forte solubilité aqueuse (environ 95 %) ne présente pas le taux d'azote fixé requis lui permettant d'être considéré comme un agent épaississant très effi-

cace de plâtres à projeter. En effet, pour obtenir une efficacité comparable à celle conférée par les composés amylacés conformes à la présente invention, ledit composé amylacé T1 doit être introduit à des doses très significativement supérieures dans les compositions de plâtre (doses multipliées par un facteur de 3, pour le moins).

Ceci est vrai, entre autres, en regard des composés amylacés cationiques L et M conformes à l'invention. Il est remarquable de souligner que le taux d'introduction dudit composé amylacé T1 devrait être multiplié par un facteur 10 (soit 0,14 X 10 = 1,4 %) pour que ce composé présente un effet épaississant comparable à celui des produits L et M.

Les résultats du présent EXEMPLE 3 montrent également :

1) la non ou faible efficacité des amylacés cationiques T2 et T3 qui, dans le cas présent, procurent un effet soit contraire à l'effet recherché (cf COMPOSITIONS T2, T3 et T3b : valeurs d'étalement supérieures à celles observées avec la COMPOSITION T0, exempte de tout composé amylacé), soit un effet nul ou quasi-nul (cf COMPOSITIONS T2b, T2c et T3c).

2) la possibilité d'utiliser efficacement, conformément à l'invention, des composés amylacés cationiques de natures très diverses, notamment quant à leurs origines botaniques (maïs, maïs waxy, fécule de pomme de terre, blé, mélange blé/fécule, ...) et quant aux traitements chimiques et/ou physiques auxquels ont été soumis lesdits composés, simultanément ou non à leur cationisation (réticulation, fluidification ou hydrolyse, extrusion, gélatinisation sur tambour, atomisation, ...).

EXEMPLE 4 :

UTILISATION DE COMPOSES AMYLACES CATIONIQUES SELON L'INVENTION ET DE COMPOSES AMYLACES CARBOXY- OU HYDROXYALKYLES DANS DES COMPOSITIONS DE PLÂTRE A PROJETER

Dans le cadre de cet exemple, on compare l'efficacité de composés amylacés cationiques conformes à l'invention à celle de composés de type, respectivement, hydroxyalkylé ou carboxyalkylé utilisés selon l'art antérieur et ce, dans la composition de plâtre à projeter décrite au niveau de l'EXEMPLE 3, dont le pH se situe à 12,7 environ.

Les composés amylacés "témoins" consistent en les composés T4 et T5 tels que décrits au niveau de l'EXEMPLE 2.

Les composés amylacés cationiques conformes à l'invention dont le caractère épaississant est estimé consistent en les composés F et G tels que décrits au niveau de l'EXEMPLE 1 et en les composés P et Q tels que décrits ci-après.

composé P = amidon de maïs cationique (taux d'azote fixé environ 1,2 %), extrudé et présentant une solubilité aqueuse de 88 % environ.

composé Q = amidon de maïs waxy cationique (taux d'azote fixé environ 1 %), extrudé et présentant une solubilité aqueuse de 88 % environ.

Par rapport à la composition témoin T0 ne contenant aucun composé amylacé mais uniquement "RETARDAN$^R$ P" et 0,6 % de chaux, on obtient, avec respectivement 0,14 % de chacun des composés T4, T5, F, G, P et Q, les compositions correspondantes qui présentent les valeurs de "delta VE" reprises ci-après :

| COMPOSITION | DELTA VE (en mm) |
|---|---|
| T0 | 0 |
| T4 | - 110 |
| T5 | - 20 |
| F | - 110 |
| G | - 95 |
| P | - 105 |
| Q | - 113 |

Il ressort globalement des résultats du présent EXEMPLE 4 que les composés amylacés cationiques sélectionnés conformément à l'invention, y compris ceux présentant une forte teneur en amylopectine, sont des agents épaississants de plâtres à projeter très efficaces.

Cette efficacité est, dans le cas présent, comparable à celle obtenue avec le composé T4, lequel est un agent épaississant très communément utilisé dans les compositions de plâtre présentant un pH élevé mais dont les inconvénients ont été rappelés précédemment. Par contre, l'efficacité des composés amylacés cationiques spécifiquement conformes à l'invention est, dans le cas présent, très significativement supérieure à celle du composé carboxyméthylé T5.

Des essais supplémentaires ont par ailleurs démontré que l'efficacité des composés amylacés cationiques conformes à l'invention n'était en aucun cas significativement altérée du fait du stockage desdits composés, par exemple pendant 3 jours à 80°C, ni du fait de la variation de la qualité de l'eau (dureté, niveau de chlore,...) utilisée pour le gâchage des compositions de plâtre.

Il résulte de l'ensemble des résultats des EXEMPLES 1 à 4 que l'on dispose désormais d'une catégorie de composés amylacés sélectionnés, laquelle est notamment:

- a) applicable industriellement à des compositions de plâtre de natures, compositions et destinations variées,

- b) utilisable dans des compositions de plâtre présentant des pH variés, y compris situés dans une zone "intermédiaire",
- c) utilisable directement au niveau d'eaux de gâchage de caractéristiques variées ou de compositions adjuvantes,
- d) d'obtention simple, souple et peu coûteuse, et
- e) d'efficacité non substantiellement altérable au stockage.

**Revendications**

1. Composition de plâtre contenant un composé amylacé cationique, caractérisée en ce que ledit composé amylacé cationique présente un taux d'azote fixé d'au moins 0,15 % environ et une solubilité aqueuse d'au moins 50 % environ.

2. Composition de plâtre selon la revendication 1, caractérisée en ce que le composé amylacé cationique présente une solubilité aqueuse de 70 à 100 %, de préférence de 75 à 99,8 %.

3. Composition de plâtre selon l'une des revendications 1 ou 2, caractérisée en ce que le composé amylacé cationique présente un taux d'azote fixé de 0,25 à 1,50 %.

4. Composition de plâtre selon l'une des revendications 1 à 3, caractérisée en ce que le composé amylacé cationique présente un taux d'azote fixé de 0,16 à 2 %, de préférence de 0,20 à 1,85 %.

5. Composition de plâtre selon l'une quelconque des revendications 1 à 4, caractérisée en ce que le composé amylacé cationique représente moins de 0,5 %, en particulier d'environ 0,01 à environ 0,2 %, en poids par rapport au poids de plâtre contenu dans ladite composition.

6. Composition de plâtre selon l'une quelconque des revendications 1 à 5, caractérisée en ce que le composé amylacé cationique est choisi parmi les amidons cationiques, les amidons cationiques réticulés, les amidons cationiques oxydés et les amidons cationiques fluidifiés ou hydrolysés par voie acide et/ou enzymatique, ces derniers consistant, de préférence, en des hydrolysats d'amidon cationiques d'un DE inférieur à 5 environ.

7. Composition de plâtre selon l'une quelconque des revendications 1 à 6, caractérisée en ce que le composé amylacé cationique est choisi parmi les composés amylacés cationiques traités thermiquement, mécaniquement, aux hautes et très hautes pressions, aux ultra-sons, aux micro-ondes et/ou sous vide, en particulier choisi parmi les composés amylacés cationiques extrudés, cuits à la vapeur en continu, gélatinisés sur tambour, atomisés, fluidifiés ou cisaillés mécaniquement et/ou broyés.

8. Composition de plâtre selon l'une quelconque des revendications 1 à 7 caractérisée en ce que le composé amylacé cationique est choisi parmi ceux issus de céréales ou tubercules présentant une teneur en amylopectine d'au moins 80 % environ, de préférence choisi parmi ceux issus de maïs waxy ou de pomme de terre waxy.

9. Utilisation d'un composé amylacé cationique présentant un taux d'azote fixé d'au moins 0,15 % environ et une solubilité aqueuse d'au moins 50 % environ pour la préparation de compositions de plâtre ou pour la préparation de compositions adjuvantes ou d'eaux de gâchage destinées auxdites compositions de plâtre.

10. Utilisation selon la revendication 9, caractérisée en ce que le composé amylacé cationique présente :

- un taux d'azote fixé de 0,20 à 1,85 %,
- et une solubilité aqueuse de 75 à 99,8 %.

11. Utilisation selon l'une des revendications 9 ou 10, caractérisée en ce que l'on utilise une quantité de composé amylacé cationique telle que la composition de plâtre, la composition adjuvante ou l'eau de gâchage contient moins de 0,5 %, en particulier d'environ 0,01 à environ 0,2 %, en poids dudit composé amylacé exprimé par rapport au poids de plâtre déjà contenu dans ladite composition de plâtre ou devant être contenu dans celle-ci après sa mise en contact avec ladite composition adjuvante ou ladite eau de gâchage.

EP 0 807 612 A1

Office européen
des brevets

**RAPPORT DE RECHERCHE EUROPEENNE**

Numero de la demande

EP 97 40 1053

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | FR 2 434 821 A (ROQUETTE FRERES)<br><br>* revendications; exemple VI *<br>--- | 1,3,4,6,<br>8-11 | C04B24/38<br>C04B28/14 |
| A | STARCH STARKE,<br>vol. 45, no. 6, 1 Juin 1993,<br>pages 226-231, XP000361591<br>KHALIL M I ET AL: "PREPARATION AND<br>CHARACTERIZATION OF SOME CATIONIC<br>STARCHES"<br>* page 230, alinéa 4.1 *<br>--- | | |
| D,A | EP 0 172 773 A (ROQUETTE FRERES)<br>* page 1, ligne 22 - ligne 29 *<br>--- | 1,5-7,9 | |
| D,A | FR 1 429 406 A (NATIONAL STARCH AND<br>CHEMICAL CORP.)<br>* page 2, colonne de gauche, alinéa 2;<br>exemple 1.K *<br>--- | | |
| A | CHEMICAL ABSTRACTS, vol. 104, no. 20,<br>19 Mai 1986<br>Columbus, Ohio, US;<br>abstract no. 173360m,<br>XP002024497<br>* abrégé *<br>& DD 229 683 A (VEBHARZER GIPSWERKE)<br>----- | 1 | **DOMAINES TECHNIQUES RECHERCHES (Int.Cl.6)**<br><br>C04B<br>C08B |

Le présent rapport a été établi pour toutes les revendications

| Lieu de la recherche | Date d'achèvement de la recherche | Examinateur |
|---|---|---|
| LA HAYE | 26 Août 1997 | Theodoridou, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

14